# EUROPEAN PATENT APPLICATION

(11) **EP 2 910 533 A1**
(43) Date of publication of application: **26.08.2015**
(21) Application number: 15156096.8
(22) Date of filing: 23.02.2015
(51) Int. Cl.: C03B 37/012, C03B 37/018

(54) **Optical fiber and method for producing optical fiber preform**

(30) Priority: 24.02.2014 JP 2014032939
(71) Applicant: Sumitomo Electric Industries, Ltd., Osaka-shi, Osaka 541-0041 (JP)
(72) Inventor: Tamura, Yoshiaki, Kanagawa (JP); Haruna, Tetsuya, Kanagawa (JP); Hirano, Masaaki, Kanagawa (JP)
(74) Representative: Hoffmann Eitle

(57) **Abstract**

An optical fiber having a central axis includes a core extending along the central axis and containing an alkali metal element, and a cladding having a lower refractive index than the core, wherein a radial distance with respect to the central axis is defined as r, a power of light propagating through the core at the radial distance r is defined as P(r), and a fictive temperature at a radial distance rₘₐₓ at which rP(r) becomes maximum is at least 50°C lower than a fictive temperature on the central axis. The fictive temperature profile can be obtained by having a maximum alkali metal concentration at distance rₘₐₓ . A method of making the core preform comprises doping with an alkali metal element the inner surface of a glass pipe, inserting a glass rod into the doped glass pipe and collapsing the glass pipe on the rod to form a core portion.

## Description

### BACKGROUND OF THE INVENTION

### Field of the Invention

The present invention relates to an optical fiber containing an alkali metal element and a method for producing an optical fiber preform containing an alkali metal element.

### Description of the Related Art

There are optical fibers consisting of silica-based glass and having a core containing an alkali metal element. An optical fiber preform having a core section containing an alkali metal element allows a low viscosity of the core section during drawing of the optical fiber preform and relaxation of the network structure of silica glass proceeds. As a result, reduction in the attenuation of the optical fiber can be achieved.

Japanese Unexamined Patent Application Publication (Translation of PCT Application) No. 2005-537210 and U.S. Patent Application Publication No. 2006/0130530 describe a diffusion doping method of doping silica glass with an alkali metal element. The diffusion doping method is performed in the following manner. While vapor of a source such as an alkali metal or an alkali metal salt is introduced into a glass pipe, the glass pipe is heated with an external heat source or plasma is generated within the glass pipe. As a result, the inner surface of the glass pipe is doped with the alkali metal element by diffusion.

After the inner-surface region of the glass pipe is doped with the alkali metal element, the diameter of this glass pipe is reduced by heating. After that, the inner surface of the glass pipe is etched for a certain thickness in order to remove unwanted transition metal elements such as Ni and Fe that have also been introduced during doping with the alkali metal element. Since alkali metal elements diffuse at a higher speed than transition metal elements, even after such a glass surface is etched for a certain thickness to remove transition metal elements, alkali metal elements can be left within the glass surface. After the glass pipe is thus etched, the glass pipe is collapsed by heating, so that a core rod containing an alkali metal element is produced. This core rod containing an alkali metal element is subsequently surrounded by a cladding section having a lower refractive index than a core section including the core rod. Thus, an optical fiber preform is produced. This optical fiber preform is drawn in a known manner so that an optical fiber can be produced.

### SUMMARY OF THE INVENTION

It is an object of the present invention to provide an optical fiber exhibiting a low attenuation and a method for producing an optical fiber preform from which the optical fiber is produced.

An embodiment of the present invention provides an optical fiber having a central axis, the optical fiber including a core extending along the central axis and containing an alkali metal element and a cladding having a refractive index lower than that of the core, wherein a radial distance with respect to the central axis is defined as r, a power of light propagating through the optical fiber at the radial distance r is defined as P(r), and a fictive temperature at a radial distance rₘₐₓ at which rP(r) becomes maximum is at least 50°C lower than a fictive temperature on the central axis.

Another embodiment of the present invention provides an optical fiber having a central axis, the optical fiber including a core extending along the central axis and containing an alkali metal element and a cladding having a refractive index lower than that of the core, wherein a radial distance with respect to the central axis is defined as r, a power of light propagating through the optical fiber at the radial distance r is defined as P(r), and a concentration of the alkali metal element at a radial distance rₘₐₓ at which rP(r) becomes maximum is higher than a concentration of the alkali metal element on the central axis.

In each of the optical fibers according to the above-described embodiments of the present invention, a ratio of a radius of the core to a radial distance at which a concentration of the alkali metal element becomes maximum may be 1.2 to 3.6; a variation of residual stress within the core, the residual stress varying as a function of the radial distance r, may be 10 MPa or less; and an attenuation at a wavelength of 1550 nm may be 0.16 dB/km or less.

Another embodiment of the present invention provides a method for producing an optical fiber preform including a core section including a first core portion extending along a central axis and a second core portion surrounding the first core portion, and a cladding section having a lower refractive index than the core section, the method including doping, with an alkali metal element, an inner surface of a glass pipe that is to serve as the second core portion; inserting a glass rod that is to serve as the first core portion into the glass pipe; and collapsing the glass pipe on the glass rod by heating the glass pipe, wherein a ratio of a radius of the core section to a radius of the first core portion is 1.2 to 3.6.

The present invention can provide an optical fiber exhibiting a low attenuation and a method for producing an optical fiber preform from which the optical fiber is produced.

### BRIEF DESCRIPTION OF THE DRAWINGS

Figure 1 is a graph illustrating a potassium concentration distribution, rP(r), and a refractive-index distribution in an optical fiber.
Figure 2 is a graph illustrating the relationship between attenuation and an average potassium concentration over the whole core of an optical fiber.
Figure 3 is a cross-sectional view of an optical fiber according to an embodiment of the present invention.
Figure 4 is a graph illustrating the relationships between fictive temperature and attenuation in terms of two cases.
Figure 5 is a graph illustrating the relationships of the radial distance of doping an optical fiber preform with potassium, with potassium concentration on the central axis of the optical fiber preform, potassium concentration at a position displaced from the central axis, and attenuation of an optical fiber produced from this optical fiber preform.
Figure 6 is a graph indicating residual-stress distributions in optical fibers in terms of a case where a potassium concentration becomes maximum on the central axis of an optical fiber and a case where a potassium concentration becomes maximum at a radial distance of 3 µm with respect to the central axis of an optical fiber.
Figure 7 is a flow chart of a method for producing an optical fiber preform according to an embodiment of the present invention.
Figure 8 is a graph illustrating the relationship between attenuation and the ratio of a core radius to a radial distance of a potassium concentration peak.

### DESCRIPTION OF THE PREFERRED EMBODIMENTS

Hereinafter, embodiments according to the present invention will be described in detail with reference to the attached drawings.

Optical fibers produced by the methods of producing an optical fiber described in Japanese Unexamined Patent Application Publication (Translation of PCT Application) No. 2005-537210 and U.S. Patent Application Publication No. 2006/0130530 exhibit a high attenuation in some cases. In order to achieve reduction in the attenuation, the inventors of the present invention performed studies on optical fibers formed of silica-based glass and including a core containing an alkali metal element. In the studies, the inventors have found the following findings. In a case where a region of the central axis of an optical fiber preform is doped with an alkali metal element, the alkali metal element diffuses such that its concentration is high in the central portion of the core section and decreases toward the circumferential portion of the core section. Accordingly, the viscosity of the optical fiber preform at a drawing temperature is expected to be low in the central portion of the core section and to increase toward the circumferential portion.

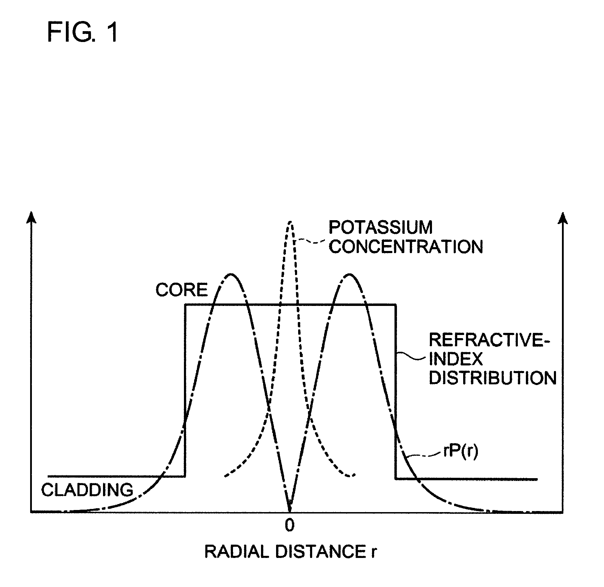

As illustrated in Fig. 1, in an optical fiber obtained by drawing such an optical fiber preform, the concentration of the alkali metal element is high in the central portion of the core and decreases toward the circumferential portion of the core. Accordingly, the scattering loss of the optical fiber is expected to be low in the central portion of the core and to increase toward the circumferential portion. On the other hand, when the radial distance of an optical fiber with respect to the central axis thereof is defined as r and the power of light having a wavelength of 1.55 µm and propagating through the core at the radial distance r is defined as P(r), the product of r and P(r), that is, rP(r) is a function having peaks in the circumferential portion of the core. Thus, the region in which the glass structure considerably affects propagating light is expected not to be the central portion of the core but to be the circumferential portion of the core, the circumferential portion having a lower concentration of the alkali metal element.

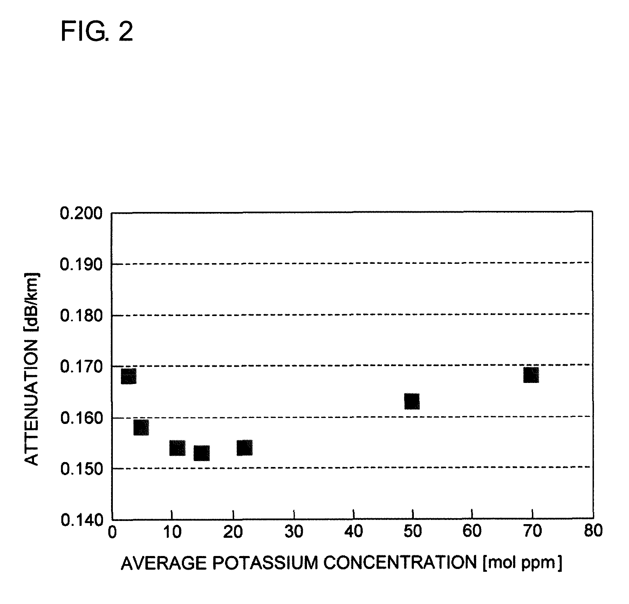

One technique of reducing the attenuation of an optical fiber is to increase the concentration of an alkali metal element over the whole core of the optical fiber. However, referring to Fig. 2, an average alkali-metal-element concentration of 50 mol ppm or more over the whole core may result in a high attenuation. (The "mol ppm" as used herein is a number of dopant atoms in SiO₂ of one million units.) For this reason, the total amount of the alkali metal element is preferably as small as possible. Considering the above, the inventors have conceived production of a core of an optical fiber, the core being doped with an alkali metal element such that the alkali-metal-element concentration has peaks at positions displaced from the central axis of the optical fiber (central axis of the core).

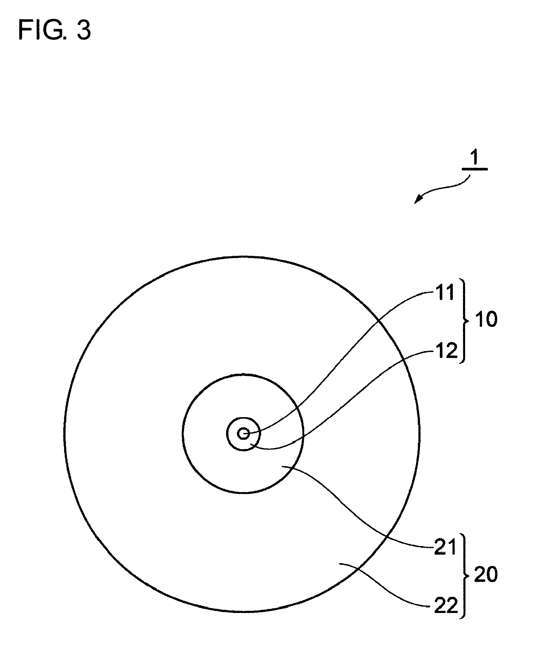

Figure 3 is a cross-sectional view of an optical fiber 1 according to an embodiment of the present invention. The optical fiber 1 is formed of silica glass and includes a core 10 and a cladding 20 surrounding the core 10. The core 10 includes a first core 11 and a second core 12 surrounding the first core 11. The cladding 20 includes a first cladding (optical cladding) 21 surrounding the second core 12 and a second cladding (physical cladding) 22 surrounding the first cladding 21. Referring to Fig. 1, the core 10 has a higher refractive index than the cladding 20 in the optical fiber 1.

It is known that a glass having a low fictive temperature exhibits a low Rayleigh-scattering loss. The fictive temperature represents the degree of disorder of atomic arrangement in glass. Specifically, the higher the fictive temperature of glass (the higher the degree of disorder), the higher the Rayleigh-scattering intensity becomes; the lower the fictive temperature of glass (the lower the degree of disorder), the lower the Rayleigh-scattering intensity becomes.

One technique of decreasing fictive temperature is to dope the core section of an optical fiber preform with an alkali metal element. In this case, in the step of forming the optical fiber preform into an optical fiber, the alkali metal element is thermally diffused such that the alkali-metal-element concentration becomes maximum (peak) at a position of doping with the alkali metal element and monotonically decreases from this peak position toward surrounding positions. Thus, in the core 10 of the optical fiber 1 derived from such a core section doped with an alkali metal element, the fictive temperature becomes minimum (bottom) at a position of doping with the alkali metal element and monotonically increases from this bottom position toward surrounding positions. By designing an optical fiber such that a radial distance r at the minimum fictive temperature is the same as a radial distance rₘₐₓ at which rP(r) becomes maximum (maximum rP(r)), attenuation can be efficiently reduced.

One technique (described below) of decreasing the fictive temperature of an outer region of the core 10 is to adjust the position of doping an optical fiber preform with an alkali metal element such that the radial distance of this doping with the alkali metal element in an optical fiber produced from the optical fiber preform is the same as the radial distance rₘₐₓ at the maximum rP(r). Another technique is to make the concentration of another dopant that lowers fictive temperature such as halogen be high in an outer region of the core 10.

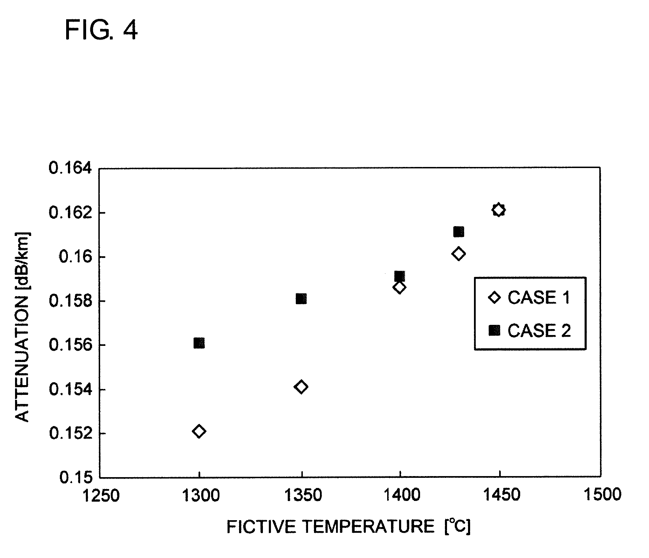

Figure 4 is a graph illustrating the relationships between fictive temperature and attenuation in terms of Case 1 and Case 2. Case 1 relates to the relationship between attenuation and fictive temperature at the radial distance rₘₐₓ at the maximum rP(r) in an optical fiber 1 in which a fictive temperature on the central axis of the core 10 is 1450°C. Case 2 relates to the relationship between attenuation and fictive temperature on the central axis of the core 10 in an optical fiber 1 in which a fictive temperature at the radial distance rₘₐₓ is 1450°C.

Referring to Fig. 4, reduction in attenuation is more effectively achieved by decreasing the fictive temperature at the radial distance rₘₐₓ at the maximum rP(r) as illustrated in Case 1 than by decreasing the fictive temperature on the central axis of the core as illustrated in Case 2. In Case 1, attenuation is considerably reduced by making the fictive temperature at the radial distance rₘₐₓ be at least 50°C lower than the fictive temperature on the central axis of the core 10.

As described above, the higher the alkali-metal-element concentration, the lower the fictive temperature and the Rayleigh-scattering become. However, as described above with reference to Fig. 2, it has been found that a high average alkali-metal-element concentration over the whole core results in an increase in wavelength-independent attenuation, the increase being dependent on the average concentration. Thus, it is necessary to reduce an attenuation due to Rayleigh scattering under a condition in which the average alkali-metal-element concentration over the whole core is set to less than 50 mol ppm. By increasing the alkali-metal-element concentration at the radial distance rₘₐₓ at the maximum rP(r), attenuation can be efficiently reduced under the above-described condition of average concentration, compared with by increasing the alkali-metal-element concentration on the central axis of the optical fiber.

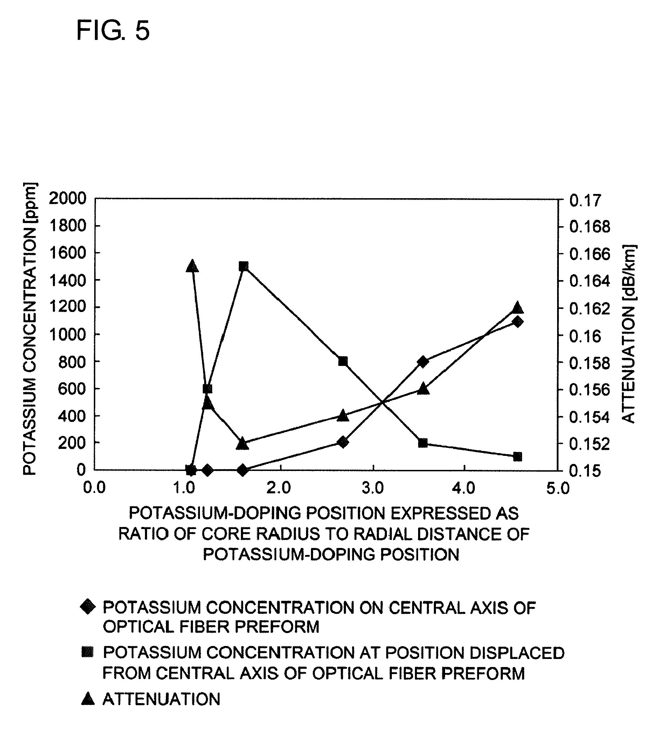

Figure 5 is a graph illustrating the relationships of the radial distance of doping an optical fiber preform with potassium, with potassium concentration on the central axis of the optical fiber preform, potassium concentration at a position displaced from the central axis, and attenuation of an optical fiber produced from this optical fiber preform. The abscissa axis of the graph indicates a potassium-doping position expressed as "ratio of core radius to radial distance of potassium-doping position". The larger the abscissa-axis value, the closer the potassium-doping position to the central axis of the optical fiber. The term "position displaced from the central axis" denotes a radial position in the optical fiber preform corresponding to the radial distance rₘₐₓ (3 µm, ratio: 1.6) at the maximum rP(r) in the optical fiber.

Referring to Fig. 5, the attenuation at a wavelength of 1550 nm drops sharply from a point at which the ratio is about 3.0 and the potassium concentration at the radial distance rₘₐₓ in the optical fiber preform becomes higher than that on the central axis of the preform. In contrast, the attenuation rises again in case potassium doping is carried out at an outside (smaller ratio side) of the radial distance rₘₐₓ in the optical fiber preform. In this way, by adjusting the radial distance r at which the alkali-metal-element concentration becomes maximum, the attenuation at the wavelength of 1550 nm of the optical fiber 1 can be set to 0.16 dB/km or less.

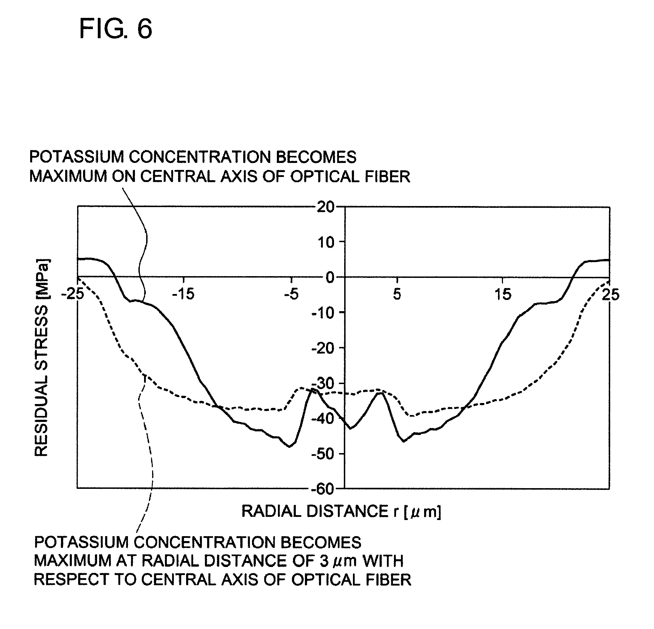

Figure 6 is a graph indicating a residual-stress distribution of a case where a potassium concentration becomes maximum on the central axis of an optical fiber and a residual-stress distribution of a case where a potassium concentration becomes maximum at a radial distance of 3 µm in an optical fiber. In the case where the potassium concentration becomes maximum on the central axis of an optical fiber, a stress difference of 10 MPa was observed between stresses at the central portion and a circumferential portion (at a radial distance of about 5 µm) of the core 10. This is probably because the optical fiber preform exhibited different viscosities depending on the potassium concentration distribution in the radial direction at the drawing temperature of the optical fiber preform: the circumferential portion exhibited a high viscosity, which led to the stress difference. The attenuation at a wavelength of 1550 nm of this optical fiber 1 was measured and found to be 0.156 dB/km.

In the other case where the potassium concentration becomes maximum at the radial distance of 3 µm, the residual stress over the core 10 was substantially uniform. This is probably because the alkali metal element was thermally diffused toward the central portion of the core 10 and toward the circumferential portion of the core 10 during drawing; and, as a result, the difference in potassium concentration between the central portion and the outermost circumferential portion was smaller than that in the case where the central-axis region of the optical fiber was doped with potassium. The attenuation at a wavelength of 1550 nm of this optical fiber 1 was found to be a very low value of 0.152 dB/km. This is probably because the residual-stress difference was small within cross sections perpendicular to the central axis of the core 10. In this way, by setting the alkali-metal-element concentration at the radial distance rₘₐₓ at the maximum rP(r) be higher than that on the central axis of an optical fiber, the variation of residual stress in the radial direction of the core 10 can be decreased to 10 MPa or less.

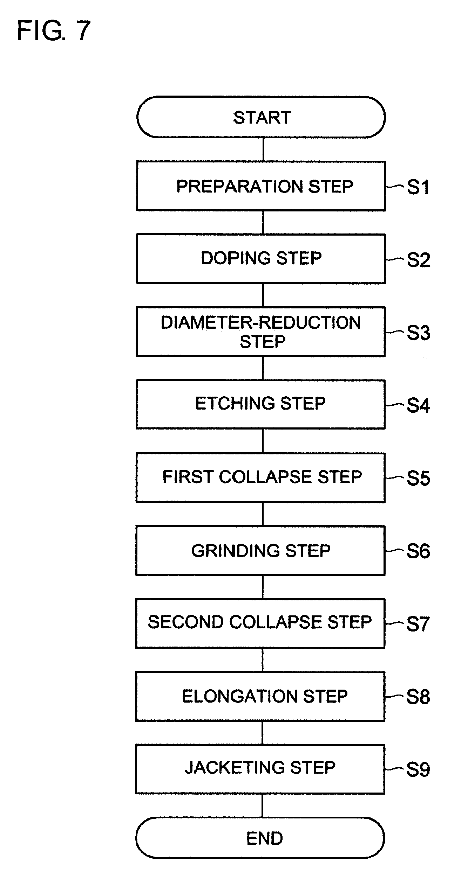

Figure 7 is a flow chart of a method for producing an optical fiber preform according to an embodiment of the present invention. The method for producing an optical fiber preform according to this embodiment includes the following steps carried out sequentially: a preparation step (step S1), a doping step (step S2), a diameter-reduction step (step S3), an etching step (step S4), a first collapse step (collapse step) (step S5), a grinding step (step S6), a second collapse step (step S7), an elongation step (step S8), and a jacketing step (step S9). This production method can provide an optical fiber preform including a core section and a cladding section.

In the preparation step (step S1), a silica glass pipe into which an alkali metal element is to be diffused is prepared.

In the doping step (step S2), the inner surface of the silica glass pipe is doped with an alkali metal element. The alkali metal element is, for example, potassium; and an alkali metal source such as potassium bromide (KBr) is used. A gas of the alkali metal source heated with an external heat source such as an electric furnace or a burner is supplied together with a carrier gas (such as O₂ gas) into the glass pipe. Simultaneously, the glass pipe is heated with an external heat source such as an oxyhydrogen burner. In this way, the glass pipe is diffusion-doped with the alkali metal element through the inner surface of the glass pipe.

In the diameter-reduction step (step S3), the inner diameter of the glass pipe doped with the alkali metal element is reduced to a size slightly larger than (for example, 1.1 times) the diameter of a glass rod to be inserted into the glass pipe in the first collapse step (step S5) and to serve as the central region of the core section.

In the etching step (step S4), the inner surface of the glass pipe is etched. As a result, the pipe inner surface having a high content of impurities introduced together with the alkali metal element is ground, so that the impurities can be removed.

In the first collapse step (step S5), a rod-in-collapse process is carried out: a silica glass rod that is to serve as the central region of the core section is inserted into the etched glass pipe; and the glass pipe and the glass rod in this state are integrated, so that a first rod containing the alkali metal element is obtained. The central region of the first rod is to serve as the first core portion.

In the grinding step (step S6), the circumferential region of the first rod, which is obtained by the collapse step, is ground to provide a core section. The circumferential region (other than the central region) of the core section serves as a second core portion.

In the second collapse step (step S7), the core section is surrounded by a first cladding portion. The first rod, which is processed in step S6 and serves as the core section, is inserted into a fluorine-containing silica glass pipe, which serves as the first cladding portion; and the first rod and the silica glass pipe are integrated by heating with an external heat source. As a result of this integration by the rod-in-collapse process, a second rod is obtained. The amount of water in the core section and the portion of the first cladding portion adjacent to the core section can be suppressed to a sufficiently low amount.

In the elongation step (step S8), the second rod, which is obtained by integration of the core section and the first cladding portion, is elongated such that a fiber to be obtained has a desired core diameter.

In the jacketing step (step S9), the elongated rod is surrounded by a second cladding portion containing fluorine by a known process such as outside vapor deposition (OVD), vapor-phase axial deposition (VAD), or a rod-in-collapse process. Thus, an optical fiber preform is produced.

In summary, the optical fiber 1 includes the core 10 and the cladding 20 having a lower refractive index than the core 10; the core 10 contains an alkali metal element; a radial distance with respect to the central axis of the core 10 is defined as r, a power of light propagating through the core 10 at the radial distance r is defined as P(r), and a fictive temperature at a radial distance rₘₐₓ at which rP(r) becomes maximum is at least 50°C lower than a fictive temperature on the central axis. In the optical fiber 1, the concentration of the alkali metal element at the radial distance rₘₐₓ is higher than the concentration of the alkali metal element on the central axis.

In such a configuration, attenuation can be efficiently reduced. Specifically, the higher the alkali-metal-element concentration, the lower the fictive temperature and the Rayleigh-scattering become. However, a high average alkali-metal-element concentration over the whole core results in an increase in wavelength-independent attenuation, the increase being dependent on the average concentration. For this reason, under a condition in which the average alkali-metal-element concentration over the whole core is set to less than 50 mol ppm, attenuation needs to be efficiently reduced. Thus, a radial distance r of doping with the alkali metal element is adjusted to be the radial distance rₘₐₓ at the maximum rP(r) to thereby satisfy the above-described conditions of the fictive temperature and the concentration of the alkali metal element. As a result, an increase in the wavelength-independent attenuation can also be suppressed.

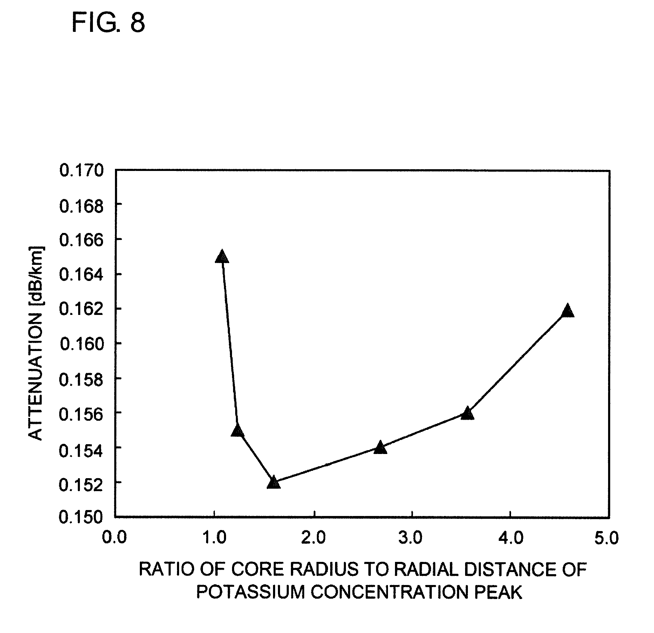

In the optical fiber 1, the ratio of the radius of the core 10 to a radial distance at which the concentration of the alkali metal element becomes maximum is 1.2 to 3.6; and the attenuation of the optical fiber 1 can be reduced to 0.16 dB/km or less. Such numerical ranges will be described below with reference to Table and Fig. 8. In the optical fiber 1, a residual-stress variation within the core 10 in the radial direction is 10 MPa or less; and the attenuation at a wavelength of 1550 nm of the optical fiber 1 can be reduced. In the optical fiber 1, the attenuation at the wavelength of 1550 nm is 0.16 dB/km or less and light can be transmitted efficiently.

A method for producing an optical fiber preform according to an embodiment of the present invention is a method for producing an optical fiber preform including a core section including a first core portion and a second core portion surrounding the first core portion, and a cladding section having a lower refractive index than the core section, the method including a doping step of doping an inner surface of a glass pipe that is to serve as the second core portion with an alkali metal element; and a collapse step of inserting a glass rod that is to serve as the first core portion into the glass pipe and integrating the glass rod and the glass pipe by heating, wherein a ratio of a radius of the core section to a radius of the first core portion is 1.2 to 3.6.

This method allows production of an optical fiber preform that provides by drawing an optical fiber 1 in which attenuation is efficiently reduced. The above-described numerical range will be described below with reference to Table and Fig. 8.

### Examples

In Examples, steps S1 to S9 in Fig. 7 were sequentially carried out as described below to thereby produce optical fiber preforms.

In the preparation step (step S1), a silica glass pipe was prepared. This silica glass pipe contained 100 mol ppm of chlorine (Cl) and 6,000 mol ppm of fluorine; and the concentration of the other dopants and impurities was 10 mol ppm or less. The silica glass pipe had an outer diameter of 35 mm and an inner diameter of about 20 mm.

In the doping step (step S2), potassium bromide (KBr) was used as an alkali metal source and heated at 840°C with a heat source to generate KBr vapor. While this KBr vapor and oxygen introduced as a carrier gas at 1 SLM (1 liter/min in terms of standard conditions) were introduced into the glass pipe, the glass pipe was heated from outside with an oxyhydrogen burner such that the surface of the glass pipe reached 2150°C. During this heating, the oxyhydrogen burner was traversed at a rate of 40 mm/min for 15 turns in total. Thus, potassium was diffused into the inner surface of the glass pipe.

In the diameter-reduction step (step S3), while oxygen was passed (at 0.5 SLM) through the glass pipe doped with potassium, the glass pipe was heated with an external heat source such that the outer surface of the glass pipe reached 2250°C. During this heating, the external heat source was traversed for 6 turns in total; and the inner diameter of the potassium-doped glass pipe was reduced to a size about 0.1 mm to about 1 mm larger than the diameter of a rod that was to be inserted into the glass pipe in the first collapse step (step S5).

In the etching step (step S4), the potassium-doped inner surface of the glass pipe was subjected to vapor-phase etching: while a gas mixture of SF₆ (at 0.2 SLM) and oxygen (at 0.5 SLM) was introduced into the glass pipe, the glass pipe was heated with an external heat source.

The first collapse step (step S5) was carried out in the following manner. A silica glass rod was inserted into the etched glass pipe. While the internal pressure (absolute pressure) of the glass pipe was reduced to 97 kPa or less and oxygen (at 2 SLM) was introduced into the glass pipe, the glass pipe was heated with an external heat source such that the surface temperature of the glass pipe reached 2150°C. Thus, the glass pipe and the glass rod were integrated into a solid rod that was an alkali-metal-element-containing first rod. This first rod had a maximum potassium concentration of 600 mol ppm. In this way, several first rods were prepared with glass rods having different diameters of 3.5 mm, 4.5 mm, 6 mm, 10 mm, 13 mm, and 15mm. In addition, for comparison, another first rod (solid rod) was prepared under the same conditions as above except that no glass rod was inserted.

In the grinding step (step S6), the circumferential region of such a first rod prepared by the collapse step was ground to provide a core section having a diameter of 16 mm.

The second collapse step (step S7) was carried out by the following rod-in-collapse process: the core section was inserted into a fluorine-containing silica glass pipe; the core section and the silica glass pipe were integrated by heating with an external heat source. Thus, the core section was surrounded by a first cladding portion to thereby provide a second rod. The maximum relative refractive-index difference between the core section and the first cladding portion was about 0.34%.

In the elongation step (step S8), the second rod was elongated such that a fiber to be obtained has a desired core diameter.

In the jacketing step (step S9), the elongated rod was surrounded by a second cladding portion containing fluorine by OVD. Thus, an optical fiber preform was produced.

This optical fiber preform was drawn at a drawing rate of 2,300 m/min and under a tension of 0.5 N applied to the glass portion during drawing to thereby produce an optical fiber. This optical fiber was found to have the following properties. A potassium concentration (average over the core) was about 3 mol ppm. A chromatic dispersion at a wavelength of 1550 nm was +15.9 ps/nm/km. A dispersion slope at a wavelength of 1550 nm was +0.054 ps/nm²/km. A zero-dispersion wavelength was 1310 nm. A dispersion slope at the zero-dispersion wavelength was +0.083 ps/nm²/km. An effective area at a wavelength of 1550 nm was 82 µm². A mode field diameter at a wavelength of 1550 nm was 10.3 µm. A mode field diameter at a wavelength of 1310 nm was 9.1 µm. A fiber cut-off wavelength on a 2 m optical fiber was 1310 nm. A cable cut-off wavelength on a 22 m optical fiber was 1230 nm. A polarization mode dispersion (C band and L band) was 0.11 ps/√km. Anon-linear coefficient at wavelength of 1550 nm and in a random polarization state was 1.1 (W·km)⁻¹. A radial distance rₘₐₓ at which rP(r), which is the product of a radial distance r and the power P(r) of light at the radial distance r, becomes maximum was 3.1 µm.

Table below describes attenuations in the cases where the glass rods having different diameters were inserted in the first collapse step (step S5). Table also describes values in terms of a rod diameter Drod, a core rod (a first rod) diameter, Dcore, a radial distance of a potassium concentration peak in a fiber having a core diameter of 10 µm, Dpeak, and a ratio of a core radius to the radial distance of the potassium concentration peak.

**Table**

| Drod [mm] | Dcore [mm] | Dpeak [µm] | Core radius/Dpeak | Attenuation [dB/km] |
|---|---|---|---|---|
| No rod | 16 | 0.0 | | 0.164 |
| 3.5 | 16 | 1.1 | 4.6 | 0.162 |
| 4.5 | 16 | 1.4 | 3.6 | 0.156 |
| 6 | 16 | 1.9 | 2.7 | 0.154 |
| 10 | 16 | 3.1 | 1.6 | 0.152 |
| 13 | 16 | 4.1 | 1.2 | 0.155 |
| 15 | 16 | 4.7 | 1.1 | 0.165 |

Figure 8 is a graph illustrating the relationship between attenuation and the ratio of a core radius to Dpeak. Table and Fig. 8 indicate that an attenuation of 0.16 dB/km or less is achieved by setting the ratio of a core radius to a radial distance of a potassium concentration peak to be in the range of 1.2 to 3.6. Table and Fig. 8 also indicate that the ratio being in the range of less than 1.2 or more than 3.6 results in a sharp increase in attenuation. The ratio being in the range of 1.2 to 2.7 results in an attenuation of 0.155 dB/km or less, which is more preferable. In summary, in the case of performing the method for producing an optical fiber preform such that the ratio of the radius of the core section to the radius of the first core portion is 1.2 to 3.6, the resultant optical fiber preform can be drawn to provide an optical fiber having an attenuation of 0.16 dB/km or less.

## Claims

1. An optical fiber having a central axis, comprising:
a core extending along the central axis and containing an alkali metal element; and
a cladding having a refractive index lower than a refractive index of the core,
wherein a fictive temperature at a radial distance rₘₐₓ at which rP(r) becomes maximum is at least 50°C lower than a fictive temperature on the central axis, r representing a radial distance with respect to the central axis and P(r) representing a power of light propagating through the optical fiber at the radial distance r.

2. An optical fiber having a central axis, comprising:
a core extending along the central axis and containing an alkali metal element; and
a cladding having a refractive index lower than a refractive index of the core,
wherein a concentration of the alkali metal element at a radial distance rₘₐₓ at which rP(r) becomes maximum is higher than a concentration of the alkali metal element on the central axis, r representing a radial distance with respect to the central axis and P(r) representing a power of light propagating through the optical fiber at the radial distance r.

3. The optical fiber according to Claim 1 or 2, wherein
a ratio of a radius of the core to a radial distance at which a concentration of the alkali metal element becomes maximum is 1.2 to 3.6.

4. The optical fiber according to any one of Claims 1 to 3, wherein
a variation of residual stress within the core, the residual stress varying as a function of the radial distance r, is 10 MPa or less.

5. The optical fiber according to any one of Claims 1 to 4, wherein
an attenuation at a wavelength of 1550 nm is 0.16 dB/km or less.

6. A method for producing an optical fiber preform including a core section including a first core portion extending along a central axis and a second core portion surrounding the first core portion, and a cladding section having a lower refractive index than the core section, the method comprising:
doping, with an alkali metal element, an inner surface of a glass pipe that is to serve as the second core portion;
inserting a glass rod that is to serve as the first core portion into the glass pipe; and
collapsing the glass pipe on the glass rod by heating the glass pipe,
wherein a ratio of a radius of the core section to a radius of the first core portion is 1.2 to 3.6.
